# EUROPEAN PATENT APPLICATION

(11) **EP 1 947 801 A1**
(43) Date of publication of application: **23.07.2008**
(21) Application number: 06761358.8
(22) Date of filing: 05.07.2006
(51) Int. Cl.: H04L 12/24, H04L 12/28

(54) **A METHOD OF QOS AUTHORIZATION**

(30) Priority: 18.10.2005 CN 200510113964
(71) Applicant: Huawei Technologies Co., Ltd., Longgang District Shenzhen, Guangdong Province, 518129 (CN)
(72) Inventor: HUANG, Yin, Guangdong 518129 (CN)
(74) Representative: Pfenning, Meinig & Partner GbR
(86) International application number: PCT/CN2006/001571
(87) International publication number: WO 2007/045137

(57) **Abstract**

The method of QoS authorization includes: the application function module determines the service information after receiving the initiation for starting the new session and transmits the service authorization request to the policy determination function module; the policy determination function module determines the QoS authorization policy after receiving the service authorization request and transmits the authorization policy to the service support node. The present invention can provide the end-to-end QoS solution for the UTRAN network which lacks of PDP context reactivation, the GGSN does not need request the distribution policy to PDF, the terminal device does not need support token, there is little change to R4 or R99 WCDMA network and the present invention can be used in the service application of non-SIP sessions.

## Description

### Field of the Invention

The present invention relates to the technical field of communications, and particularly to a method for quality of service authorization.

### Background of the Invention

The third generation mobile communication system is a communication system which can provide multiple types of high-quality multimedia services. The system, compatible with the fixed network, can implement global seamless coverage and has the capability of roaming all over the world. In the system, small portable terminals can perform any type of communication whenever and wherever. The system attracts various operators, manufactures and users all over the world because of the advantages.

In the 3G mobile communication technologies, the Universal Mobile Telecommunications System (UMTS) is a 3G mobile communication system utilizing the wireless technique of Wideband Code Division Multiple Access (WCDMA). The standardization of UMTS is accomplished by the 3rd Generation Partnership Project (3GPP). Up to now, there are four versions: R99, R4, R5 and R6. The IP Multimedia Subsystem (IMS) is proposed by 3GPP R5 and belongs to an upper layer control subsystem, which cooperates with the packet domain to implement real time and non-real time multimedia services. The IMS can implement an end-to-end IP multimedia communication. The IMS differs from the traditional multimedia services in a man-content or man-server communication mode instead of a direct man-man multimedia communication mode. Therefore, the IMS can reduce the investment for various game servers by the operators, and save operation cost and network resource.

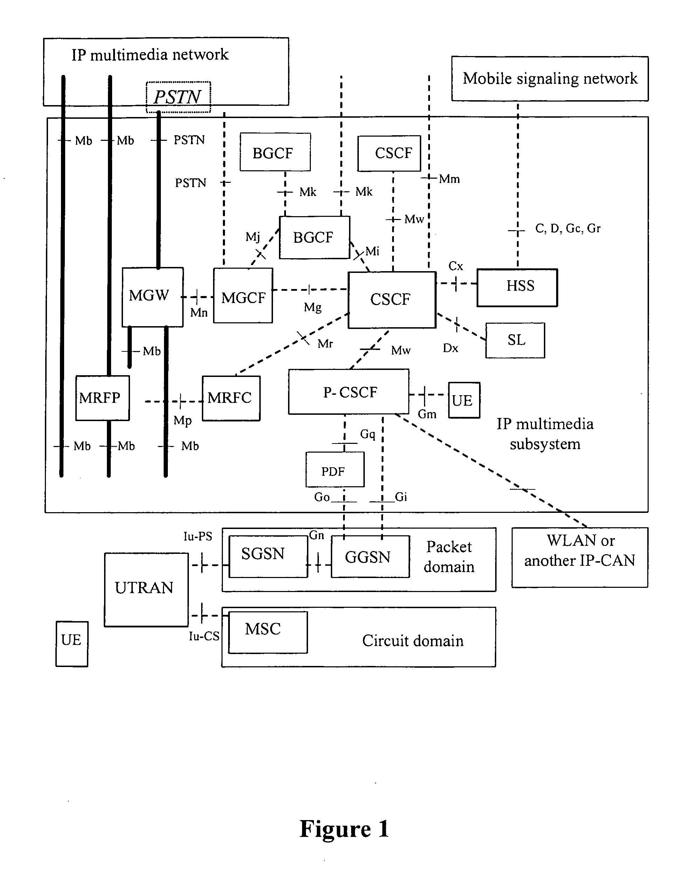

As illustrated in Figure 1, the network architecture of IMS defined by the 3GPP includes function entities of: a Call Session Control Function module (CSCF), a Media Gateway Control Function module (MGCF), an IMS-Media Gateway (IMS-MGW), a Multimedia Resource Function Controller (MRFC), a Multimedia Resource Function Processor (MRFP), and a Breakout Gateway Control Function module (BGCF).

The CSCF, as the core of the whole network, supports session initiation protocol (SIP) processing and SIP sessions. The CSCF is responsible for processing multimedia sessions from users as follows: multimedia session control, address translation and service change for service negotiation. The CSCF is implemented as a main soft switching control function module in a multimedia call in the IMS, and can be deemed as a SIP server in the IETF architecture, for implementing as a call gateway function module, a call service trigger function module and a route selection function module. Dependent on the functions, the CSCF includes the following three kinds: a Proxy Call Session Control Function module (P-CSCF), an Interrogating-CSCF (I-CSCF), and a serving-CSCF (S-CSCF). An interface between the respective CSCFs is Mw, an interface between a CSCF and another network is Mm, an interface between a CSCF and the MGCF is Mg. Protocols utilized at the respective interfaces are session-based SIPS.

In Figure 1, the Home Subscriber Server (HSS) is a central user database system, which stores user authentication information, user service information, and user roaming information. The HSS is also configured to record original charge data for users and to provide the charge data to a sorting system so as to output a bill. The Subscriber Location Function module (SLF) is a simple database and is utilized when the network is provided with multiple HSSes. The SLF maps a user address to the HSS, requests to obtain an output from the HSS containing user configuration information with the user's address as an input to the SLF. The HSS and SLF both execute the Diameter protocol as an application for authentication.

The P-CSCF acting as an Application Function module (AF) is a specific application example. The AF is an access to an IMS system for a UE, and implements as a Proxy Function and a User Agent Function module in the SIP protocol. The MGCF and IMS-MGW are function module entities for communication with the CS domain and PSTN, and are responsible for signalling control and media stream intercommunication respectively. The MRFC and MRFP are function module entities for implementing a multi-party conference. The MRFC at the control layer controls the MRFP via H.248. The BGCF is an interface between the IMS and an external network, and is responsible for selecting where the communication with the CS domain and PSTN is performed.

For Quality of Service (QoS), the 3GPP has defined an end-to-end QoS concept and architecture. The QoS specific to the IMS is centralized at a Gq interface and a Go interface. The Gq interface is an interface between the Policy Decision Function module (PDF) and the P-CSCF. The Go interface is an interface between the Gateway GPRS Support Node (GGSN) and the PDF. The QoS is an end-to-end quality of service, which is guaranteed by a terminal, an access network and a core network together. With respect to QoS control, the 3GPP has defined a QoS control at the signalling plane, which is embodied as the mapping of QoS parameters among the P-CSCF, the PDF and the GGSN, and the resource reservation mechanism. This can not guarantee an end-to-end QoS apparently. The end-to-end QoS involves all function module entities through which service data passed, including transport networks of the application layer and lower layer. The application layer is an applicant and consumer of network resource and the bearer network is a resource provider. Therefore, it is necessary to establish an association between the application layer and the lower layer bearer. At present, the International Telecommunication Union (ITU)-T is studying the QoS mapping and management method, in which a bandwidth manager may be introduced to accomplish resource state monitoring and resource scheduling, so as to guarantee the implementation of end-to-end QoS.

The decision of a QoS policy depends on session request parameters in a SIP session. The end-to-end QoS requirements are mapped section by section to respective layers of the network.

In the prior art, a QoS authorization is implemented by a GGSN requesting a policy sent. The procedure includes two parts.

(1) the AF requests of the PDF an authorized service and transfers an authorization token to the user equipment (UE).

(2) the UE reactivates a Packet Data Protocol (PDP) context, and the GGSN requests of the PDF a policy installation.

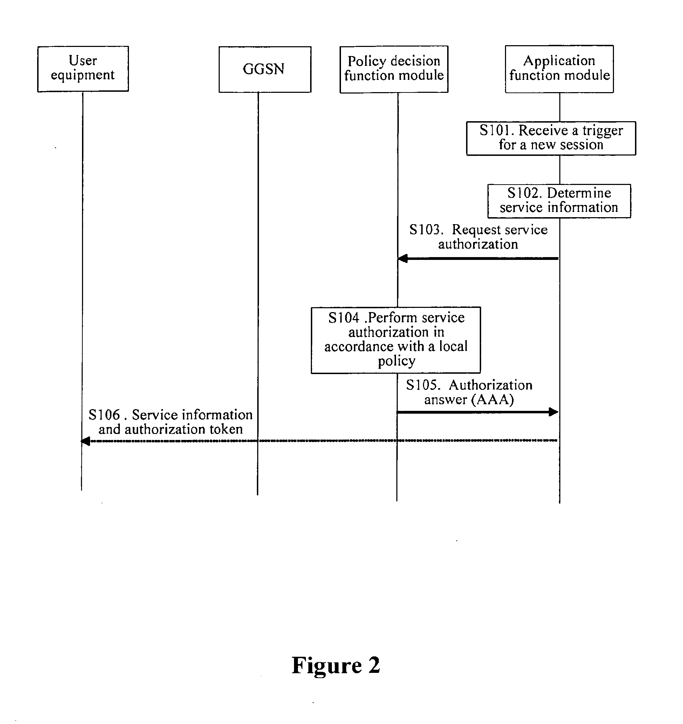

Figure 2 is a flowchart illustrating a procedure in which the AF requests of the PDF an authorization.

In step S101, the AF receives a trigger for initiating a new session, e.g. if the AF receives a SIP 183 answer message from an opposite AF, the AF initiates a new session.

In step S102, the AF determines service information. The AF may determine service information parameter (e.g. service media type or reserved bandwidth) in accordance with information in the answer message.

In step S103, the AF initiates a service authorization request to the PDF. The AF initiates the service authorization request to the PDF via an AAR message in the diameter protocol. The request carries the service information parameter determined in the step s102.

In step S104, the PDF authorizes the service requested by the AF in accordance with a local policy and generates authorization token information.

In step S105, the PDF returns an authorization answer message to the AF via an AAA message in the diameter protocol. The message includes the authorization token information.

In step S106, the AF transfers the service information and the authorization token information to the UE via a 183 answer message in the SIP protocol.

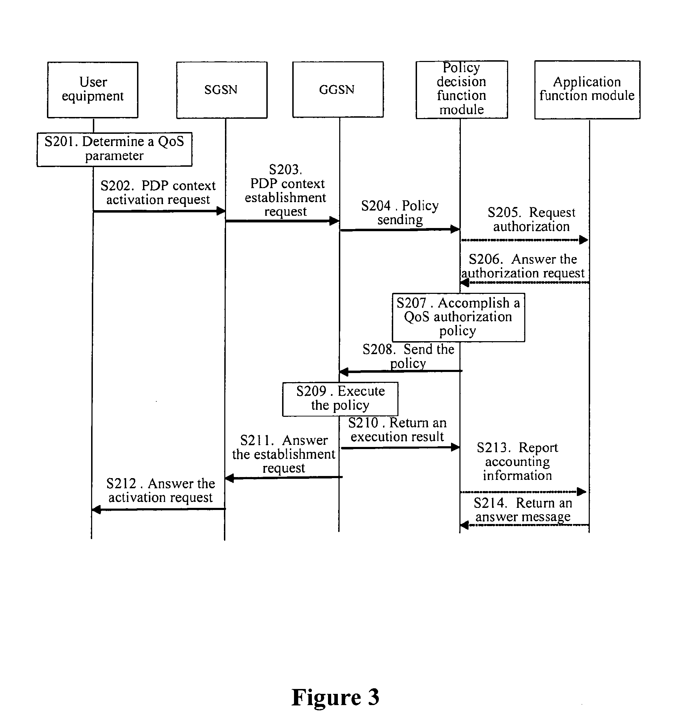

Figure 3 is a flowchart illustrating a procedure in which the UE reactivates a Packet Data Protocol (PDP) context and the GGSN requests of the PDF a policy installation.

In step S201, the UE determines a QoS parameter required for applying a PDP context in accordance with application configuration parameters or Session Description Information (SDI) in the message received from the AF.

In step S202, the UE initiates a PDP context reactivation request to the Serving GPRS Support Node (SGSN). The request includes the authorization token information.

In step S203, the SGSN initiates a PDP context establishment request to the GGSN. The request includes the authorization token information.

In step S204, the GGSN obtains the authorization token information, locates the PDF, and initiates a policy sending request to the PDF.

In step S205, the PDF authenticates whether the token is authorized, and requests of the AF authorized service information if the AF instructs.

In step S206, the AF returns the service information to the PDF if the step 5 is performed.

In step S207, the PDF accomplishes an authorization policy.

In step S208, the PDF sends the policy to the GGSN.

In step S209, the policy from the PDF is installed in the GGSN, and the GGSN executes the policy.

In step S210, the GGSN returns an installation result answer message to the PDF.

In step S211, the GGSN returns a PDP context establishment answer message to the SGSN in accordance with the installed policy information.

In step S212, the SGSN returns a PDP context reactivation answer message to the UE in accordance with the answer message from the GGSN.

In step S213, the PDF reports accounting information to the AF, if the GGSN carries the accounting information in the installation result answer message and the AF instructs.

In step S214, the AF returns an answer message to the PDF if the step s213 is performed.

It can be seen from the above QoS authorization procedure that in the existing IMS architecture, a terminal device needs to support token and the UTRAN needs to support PDP context reactivation, i.e. after the user equipment activates a PDP context for the first time to perform a register connection, the user equipment needs to reactivate the PDP context to implement data transmission. Therefore, high requirements to the network are needed and the existing R4 or R99 WCDMA network needs to be modified greatly.

### Summary of the Invention

The present invention provides a method for quality of service authorization, so that the GGSN requests of the PDF to send a policy if a QoS authorization is performed in the UTRAN network which does not support PDP context reactivation.

A method for quality of service authorization according to the present invention, applied in a communication network, includes:

determining service-related information and sending a service authorization request to a policy decision function module by an application function module, on receiving a trigger for initiating a new session;

determining a quality of service authorization policy and sending the authorization policy to a service support node by the policy decision function module, on receiving the service authorization request.

The service support node is a gateway general packet radio service support node GGSN.

Preferably, an access network entity performs a packet data protocol context.

The policy decision function module sends the authorization decision to the service support node.

The service authorization request carries user terminal identification information, a local service policy configured in the PDF, route data of the GGSN.

Adaptively, the GGSN interacts with the SGSN to implement the packet data protocol context updating; and

The SGSN interacts with user equipment to implement a packet data protocol context modification.

The step of interacting with the SGSN by the GGSN to implement the context updating includes:

sending a packet data protocol context update request from the GGSN to the SGSN; and

returning a packet data protocol context update response from the SGSN to the GGSN.

The step of interacting with user equipment by the SGSN to implement a context modification includes:

initiating a packet data protocol context modification request from the SGSN to the user equipment; and

returning a packet data protocol context modification response from the user equipment to the SGSN.

The quality of service authorization policy determined by the policy decision function module PDF includes an authorization of service requested by the application function module AF in accordance with a local policy.

The communication network returns an installation result answer message to the PDF on receiving the authorization decision from the PDF.

The PDF returns an authorization answer message to the AF on receiving the installation result answer message.

The communication network is a universal mobile telecommunications system terrestrial radio access network or a wireless local area network.

As discussed above, in the QoS authorization procedure according to the present invention, the PDF may send an authorized service policy to the GGSN on its initiative on receiving a service authorization request from the AF and may support an end-to-end wireless QoS procedure based on the access procedure. Therefore, a method of end-to-end QoS authorization may be provided for a UTRAN lack of PDP context reactivation, without the need of terminal devices supporting token. With the method, low requirements for terminals are needed and the existing R4 or R99 WCDMA network needs to be modified slightly.

In addition, the present invention may be adapted to non-SIP session service applications, e.g. provide an end-to-end QoS solution for streaming media service.

### Brief Description of the Drawings

Figure 1 is a schematic diagram illustrating the network architecture of an IP Multimedia Subsystem (IMS) according to the prior art;

Figure 2 is a flowchart illustrating a procedure in which the AF requests of the PDF an authorization according to the prior art;

Figure 3 is a flowchart illustrating a procedure in which the UE reactivates a PDP context and the GGSN requests of the PDF a policy installation according to the prior art;

Figure 4 is an exemplary flowchart of a method according to the present invention; and

Figure 5 is a flowchart of an end-to-end QoS authorization by means of sending a policy by the PDF on its initiative in the UTRAN according to an embodiment of the present invention.

### Detailed Description of the Invention

Preferred embodiments of the present invention are described in detail with reference to the drawings in order to make the principle, features and advantages of the present invention clearer.

It should be first noted that the terms, words and claim meanings can not be understood literally and commonly, but include meanings and concept conforming with the technology of the present invention, this is because the inventor needs to provide a definition of the terms appropriately, so that the present invention is described appropriately. Therefore, the arrangements in the description and the drawings are preferred embodiments of the present invention but not list all technical features of the present invention.

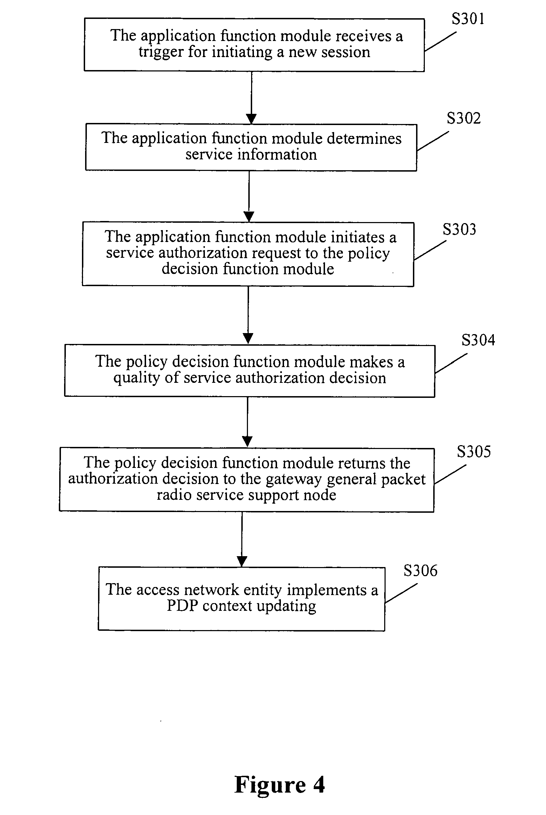

Figure 4 is a flowchart of the basic principle of the present invention. With reference to Figure 4, the flowchart includes the following steps.

In step S301, the application function module receives a trigger for initiating a new session. The application function initiates a new session if the application function receives a SIP answer message from an opposite AF.

In step S302, the application function module determines service information. The application function determines service information parameter (e.g. service media type or reserved bandwidth) in accordance with information in the SIP answer message.

In step S303, the application function module initiates a service authorization request to the policy decision function module.

In step S304, the policy decision function module makes a quality of service authorization decision.

In step S305, the policy decision function module returns the authorization decision to the gateway general packet radio service support node. The policy decision function module routes and selects the gateway general packet radio service support node in accordance with user terminal identification information, a configured local service policy, route data of the gateway general packet radio service support node. The policy decision function module sends the authorization decision to the gateway general packet radio service support node via a Decision (DEC) message in the Common Open Policy Service (COPS) protocol.

In step S306, the access network entity implements a PDP context updating. The gateway general packet radio service support node interacts with the serving general packet radio service support node to implement the packet data protocol context updating. The serving general packet radio service support node interacts with the user equipment to implement a packet data protocol context modification.

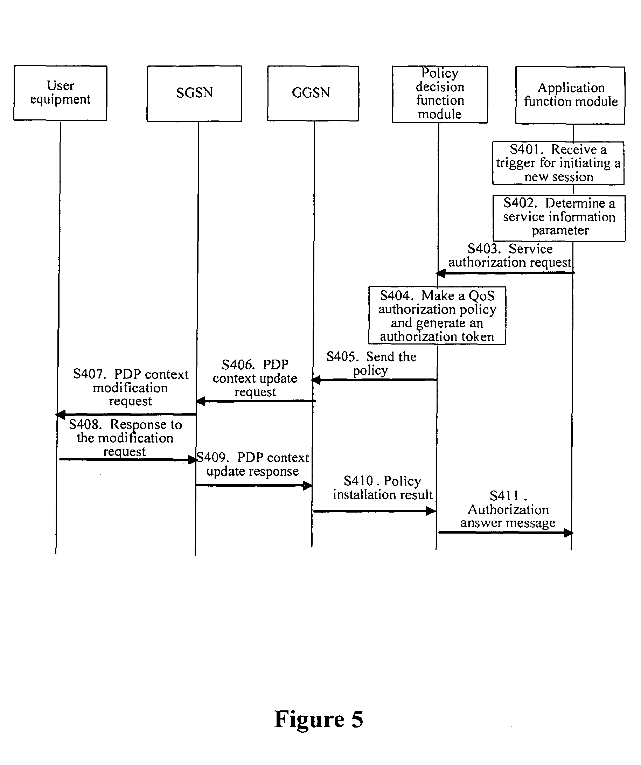

A preferred embodiment of the present invention is a method for end-to-end authorization by means of sending a policy by the PDF on its initiative in a UMTS Terrestrial Radio Access Network (UTRAN), as illustrated in Figure 5.

In step S401, the AF receives a trigger for initiating a new session, e.g. receives an SIP 183 message from an opposite AF.

In step S402, the AF determines a service information parameter (e.g. service media type or reserved bandwidth) in accordance with information in an answer message.

In step S403, the AF initiates a service authorization request to the PDF via an AAR message in the diameter protocol. The request carries the service information parameter.

In step S404, the PDF authorizes the service requested by the AF in accordance with a local policy, makes a quality of service authorization decision, and generates an authorization token.

In step S405, the PDF routes and selects an appropriate GGSN in accordance with user terminal identification information carried in the service information, a configured local service policy, route data of the GGSN, and sends the policy to the GGSN via a DEC message in the COPS protocol.

In step S406, the GGSN sends a PDP context update request to the SGSN in accordance with the policy from the PDF.

In step S407, the SGSN initiates a PDP context modification request to the UE.

In step S408, the UE returns a PDP context modification response to the SGSN.

In step S409, the SGSN sends a PDP context update response to the GGSN.

In step S410, the GGSN returns a policy installation result answer message to the PDF via a Report State (RPT) message in the COPS protocol.

In step S411, the PDF returns an authorization answer message to the AF via an AAA message in the diameter protocol.

The AF in the above embodiment refers to a P-CSCF. The P-CSCF is the first connection point of the access network to the IMS. The P-CSCF is located in the visiting domain and acts as an in-domain and out-of-domain SIP proxy server. The functions of P-CSCF include: forwarding the SIP register request from the UE to an I-CSCF, the I-CSCF being determined by a domain name provided by the UE; and forwarding the SIP message from the UE to an S-CSCF, the S-CSCF being obtained by the P-CSCF when the UE initiates a register procedure. Indeed, the P-CSCF is a SIP Proxy in nature, with the functions of receiving registers and calls from all SIP clients, finding a home domain corresponding to a SIP URI of a caller/called, and accomplishing register procedure and call connection.

The method of the present invention is also applicable to a Wireless Local Area Network (WLAN), with the same QoS authorization procedure as the steps of the above solution and the same advantageous effect as that of the above solution.

The above is merely preferred embodiments of the present invention. It should be noted that those skilled in the art can make various modifications and variations of the present invention without departing from the principle of the present invention. These modifications and variations are fallen in the scope of the present invention.

## Claims

1. A method for quality of service (QoS) authorization, applied in a communication network, **characterized in that** the method comprises:
determining service-related information and sending a service authorization request to a policy decision function module by an application function module, on receiving a trigger for initiating a new session;
determining a QoS authorization policy and sending the authorization policy to a service support node by the policy decision function module, on receiving the service authorization request.

2. The method according to claim 1, **characterized in that** the service support node is a gateway general packet radio service support node GGSN.

3. The method according to claim 1 or 2, **characterized in that** the method further comprises: performing the update of the packet data protocol context by an access network entity.

4. The method according to claim 1, **characterized in that** the policy decision function module sends the authorization decision to the service support node.

5. The method according to claim 1 or 2, **characterized in that** the service authorization request carries user terminal identification information, a local service policy configured in the PDF and route data of the GGSN.

6. The method according to claim 3, **characterized in that** the method further comprises:
interacting with an SGSN by the GGSN to implement a packet data protocol context updating; and
interacting with user equipment by the SGSN to implement a packet data protocol context modification.

7. The method according to claim 6, **characterized in that** the interacting with the SGSN by the GGSN to implement the packet data protocol context updating comprises:
sending a packet data protocol context update request from the GGSN to the SGSN; and
returning a packet data protocol context update response from the SGSN to the GGSN.

8. The method according to claim 6, **characterized in that** the step of interacting with user equipment by the SGSN to implement a context modification comprises:
initiating a packet data protocol context modification request from the SGSN to the user equipment; and
returning a packet data protocol context modification response from the user equipment to the SGSN.

9. The method according to claim 1, **characterized in that** the QoS authorization policy determined by the policy decision function module PDF includes an authorization of a service requested by the application function module AF in accordance with a local policy.

10. The method according to claim 1, **characterized in that** the communication network returns an installation result answer message to the PDF on receiving the authorization decision from the PDF.

11. The method according to claim 1, **characterized in that** the PDF returns an authorization answer message to the AF on receiving the installation result answer message.

12. The method for QoS authorization according to any one of claims 1, 2, 4, 9-11, **characterized in that** the communication network is a universal mobile telecommunications system terrestrial radio access network or a wireless local area network.
